# DEMANDE DE BREVET EUROPEEN

(11) **EP 0 852 111 A1**
(43) Date de publication de la demande: **08.07.1998**
(21) Numéro de dépôt: 98390001.0
(22) Date de dépôt: 06.01.1998
(51) Int. Cl.: A01K 1/01

(54) **Appareil sanitaire pour animaux domestiques**

(30) Priorité: 06.01.1997 FR 9700127
(71) Demandeur: Rodriguez Navarro, Francois, Andorre-La-Vieille (AD)
(72) Inventeur: Rodriguez Navarro, Francois, Andorre-La-Vieille (AD)
(74) Mandataire: Morelle, Guy Georges Alain

(57) **Abrégé**

Appareil sanitaire pour animaux domestiques, notamment de la famille des canidés, comprenant des moyens de contrôle (1) des déjections liquides desdits animaux domestiques, des moyens d'appui (2) desdits moyens de contrôle sur ledit lieu fréquenté par les animaux domestiques, lesdits moyens de contrôle comprenant des moyens (3) pour attirer lesdits animaux domestiques, des moyens (4) pour recueillir leurs déjections liquides, des moyens (5) pour traiter lesdites déjections liquides, lesdits moyens pour attirer lesdits animaux domestiques comprenant un premier produit apte à dégager des émanations volatiles attractives pour lesdits animaux domestiques, lesdits moyens (4) pour recueillir les déjections liquides comprenant au moins un moyen de réceptacle (6) pour retenir lesdites déjections liquides, et une partie verticale (7) associée au dit moyen de réceptacle et s'élevant au moins partiellement au dessus de ce dernier, afin de recueillir un ou des jets desdites déjections liquides.

## Description

La présente invention se rapporte aux appareils sanitaires pour animaux domestiques, plus particulièrement de la famille des canidés, et notamment des chiens, permettant un contrôle des déjections liquides de ceux-ci, par l'accomplissement de leurs besoins urinaires dans des endroits choisis en fonction de critères pratiques et d'intérêt général.

Usuellement, ces besoins physiologiques des animaux domestiques se manifestent par des traces de dépôt d'urine un peu partout dans les villes et villages, notamment au pied des façades d'immeuble, du mobilier urbain, sur les trottoirs, dans les parcs et jardins. Un tel état de fait contribue à dégrader l'hygiène et l'image notamment des endroits publics, ainsi qu'à augmenter la pollution et la propagation de mauvaises odeurs dans l'environnement.

La présente invention a essentiellement pour objet de pallier ces inconvénients. Plus précisément, elle consiste en un appareil sanitaire pour animaux domestiques, notamment de la famille des canidés, comprenant des moyens de contrôle des déjections liquides desdits animaux domestiques, des moyens d'appui desdits moyens de contrôle sur ledit lieu fréquenté par les animaux domestiques, lesdits moyens de contrôle comprenant des moyens pour attirer lesdits animaux domestiques, des moyens pour recueillir leurs déjections liquides, des moyens pour traiter lesdites déjections liquides, lesdits moyens pour attirer lesdits animaux domestiques comprenant un premier produit apte à dégager des émanations volatiles attractives pour lesdits animaux domestiques, ledit appareil étant caractérisé en ce que lesdits moyens pour recueillir les déjections liquides comprennent au moins un moyen de réceptacle pour retenir lesdites déjections liquides, et une partie verticale associée au dit moyen de réceptacle et s'élevant au moins partiellement au dessus de ce dernier, afin de recueillir un ou des jets desdites déjections liquides.

Selon une caractéristique avantageuse, lesdits moyens pour attirer lesdits animaux domestiques sont logés à l'intérieur de ladite partie verticale, et ledit appareil comprend au moins un premier passage assurant une communication pour fluide entre lesdits moyens pour attirer lesdits animaux domestiques et l'atmosphère.

Selon une caractéristique avantageuse, l'appareil selon l'invention comprend au moins un premier compartiment à la base de ladite partie verticale, entourant au moins partiellement ladite partie verticale, un deuxième compartiment à l'intérieur de ladite partie verticale, lesdits premier et deuxième compartiments communiquant au moyen d'un deuxième passage apte à être traversé par lesdites déjections liquides, ledit premier compartiment étant destiné à recueillir les déjections liquides s'écoulant le long de ladite partie verticale et à l'extérieur de celle-ci, ledit deuxième compartiment étant destiné à contenir au moins lesdits moyens pour traiter lesdites déjections liquides.

Selon une autre caractéristique avantageuse, l'appareil selon l'invention comprend additionnellement un troisième compartiment entourant au moins partiellement ledit premier compartiment.

Selon une autre caractéristique avantageuse, ladite partie verticale est associée de manière démontable au dit moyen de réceptacle.

Selon une autre caractéristique avantageuse, lesdits moyens pour traiter lesdites déjections liquides comprennent un produit permettant de neutraliser les composants desdites déjections liquides en hydrolysant, émulsifiant, et dispersant lesdits composants.

L'invention sera mieux comprise et d'autres avantages et caractéristiques apparaîtront à la lecture de la description qui suit des exemples de mode de réalisation d'un appareil selon l'invention, accompagnée des dessins annexés, exemples donnés à titre d'illustration et sans qu'aucune interprétation restrictive de l'invention ne puisse en être tirée.

La figure 1 représente une vue en coupe de face schématique d'un exemple de mode de réalisation d'un appareil sanitaire selon l'invention.

La figure 2 représente une vue en coupe de face schématique en éclatée et réduite de l'appareil sanitaire selon la figure 1.

La figure 3 représente une vue en perspective en éclatée de l'appareil sanitaire selon la figure 2.

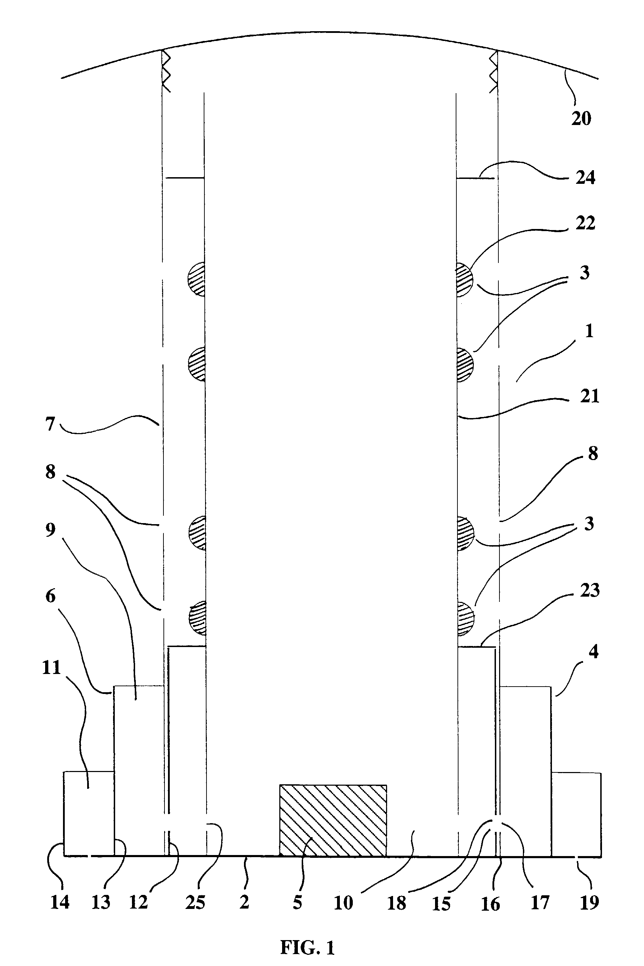

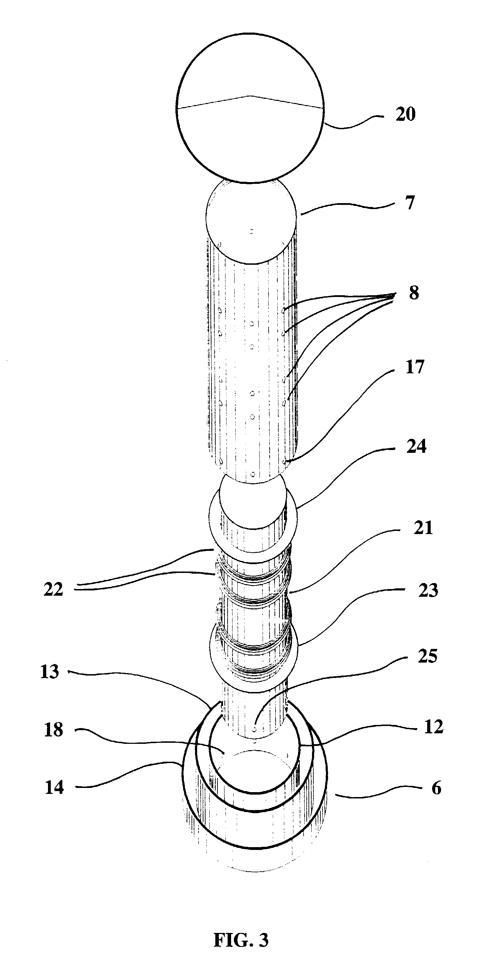

L'appareil sanitaire représenté sur les figures 1, 2, et 3 comprend des moyens de contrôle 1 des déjections liquides des animaux domestiques, des moyens d'appui 2 des moyens de contrôle 1, au sol ou sur tout support placé sur un lieu fréquenté par les animaux domestiques, notamment des canidés, et plus particulièrement des chiens.

Les moyens de contrôle de l'appareil sanitaire représenté sur les figures 1, 2, et 3 comprennent des moyens 3 pour attirer les chiens, des moyens 4 pour recueillir leurs déjections liquides, des moyens 5 pour traiter lesdites déjections liquides comme cela sera expliqué plus loin.

Les moyens 3 pour attirer les animaux domestiques comprennent avantageusement un produit attractif pour les chiens, et cela sera développé plus loin.

Les moyens 4 pour recueillir les déjections liquides comprennent un réceptacle 6 pour retenir les déjections liquides, et une partie verticale 7 associée au réceptacle 6 et s'élevant en partie au dessus de celui-ci afin de recueillir les jets des déjections liquides de chiens.

L'appareil sanitaire représenté sur les figures comprend un premier compartiment 9 à la base de la partie verticale 7, entourant celle-ci, un deuxième compartiment 10 à l'intérieur de la partie verticale 7, les premier 9 et deuxième 10 compartiments communiquant au moyen d'un passage 15 apte à être traversé par les déjections liquides, le premier compartiment 9 étant destiné à recueillir les déjections liquides s'écoulant le long de la partie verticale 7 et à l'extérieur de celle-ci, le deuxième 10 compartiment étant destiné à contenir au moins les moyens 5 pour traiter les déjections liquides ou urines de chiens. L'appareil sanitaire selon les figures comprend additionnellement un troisième 11 compartiment entourant le premier compartiment 9.

Comme représenté sur les figures, le réceptacle 6 est constitué d'un fond 2, par exemple une plaque avantageusement circulaire dans le cas où l'appareil est destiné à être installé au sol de manière à être accessible aux chiens par tous côtés, associé à trois parois 12, 13, 14 verticales, circulaires et concentriques, de forme cylindrique respectivement. La surface intérieure de la paroi intérieure 12 délimite, avec le fond 2, le deuxième compartiment 10 ; la surface extérieure de la paroi intérieure 12 délimite, avec la surface intérieure de la paroi intermédiaire 13 et le fond 2, le premier compartiment 9 ; la surface extérieure de la paroi intermédiaire 13 délimite, avec la surface intérieure de la paroi extérieure 14 et le fond 2, le troisième compartiment 11.

La partie verticale 7 est avantageusement constituée d'une paroi verticale circulaire, formant un cylindre, dont le diamètre intérieur à la base de celle-ci est légèrement supérieur au diamètre extérieur de la paroi intérieure 12 du réceptacle 6, afin que la partie verticale 7 soit apte à glisser verticalement sur la surface extérieure de la paroi verticale intérieure 12 par simple gravité, jusqu'au fond 2 du réceptacle. La partie verticale 7 sera avantageusement associée au réceptacle 6, de manière démontable, par l'intermédiaire de boulons par exemple (non représentés). Les boulons pourront être disposés selon des intervalles réguliers sur le pourtour de la partie verticale 7, vers le haut de la paroi intérieure 12 du réceptacle lorsque la partie verticale 7 est placée en position sur le fond de celui-ci, et être au nombre de deux par exemple.

La hauteur de la paroi intérieure 12 sera déterminée en fonction du diamètre de celle-ci afin d'assurer un démontage et un remontage aisée de la partie verticale 7, ainsi qu'une résistance correcte de celle-ci aux chocs latéraux essentiellement, notamment pouvant être provoqués par les chiens.

La hauteur de la paroi intermédiaire 13 sera de préférence inférieure à celle de la paroi intérieure 12, afin de permettre un accès aux boulons de liaison de celle-ci à la partie verticale 7 le cas échéant, et la hauteur de la paroi extérieure 14 sera de préférence inférieure à celle de la paroi intermédiaire 13.

Les jets d'urines émis par les chiens contre la partie verticale 7 seront reçus et stoppés par celle-ci et les déjections liquides couleront par gravité le long de la partie verticale 7 dans le premier compartiment 9 à la base de celle-ci. A partir du premier compartiment 9, les déjections liquides seront acheminées dans le deuxième compartiment 10 par l'intermédiaire du passage 15, selon le principe des vases communicants.

Le volume du deuxième compartiment 10 doit être grand devant celui du premier compartiment 9 lequel est essentiellement destiné à recueillir les urines s'écoulant le long de la partie verticale, avant qu'elles ne soient transférées dans le deuxième compartiment 10 comme expliqué plus haut. En conséquence, la distance au rayon séparant la paroi verticale intérieure 12 de la paroi verticale intermédiaire 13 doit être faible et seulement suffisante pour remplir la fonction ci-dessus.

Le passage 15 est avantageusement constitué de trous 17 à la base de la partie verticale 7, ou simples échancrures (non représentées) à partir du bord inférieur 16 de celle-ci par exemple, qui seront avantageusement réalisés de manière à coopérer avec des trous 18 réalisés dans la paroi verticale intérieure 12 du réceptacle 6 et à la base de celle-ci, dans le but d'assurer un transfert des déjections liquides du premier 9 compartiment vers le deuxième 10 par gravité, tout en évitant qu'une partie des urines s'écoulant dans le premier compartiment 9 soit prisonnière de celui-ci sans pouvoir accéder au deuxième compartiment 10.

Le troisième compartiment 11 a pour fonction de recueillir les dernières gouttes des urines déposées, ainsi que le liquide provenant d'un débordement éventuel du premier compartiment 9. Le troisième compartiment 11 sera avantageusement rempli de sable (non représenté) afin de garantir une propreté des lieux autour du premier compartiment 9.

L'appareil représenté sur les figures peut avantageusement être installé au sol, en appui sur celui-ci, par fixation au moyen de vis par exemple (non représentées), ou tout autre moyen connu. Dans le cas d'une fixation par vis, des trous 19 seront réalisés dans le fond 2 du réceptacle 6 afin de permettre un passage des vis, et de préférence dans le troisième compartiment 11 afin de réduire un risque de fuite des déjections liquides hors de l'appareil.

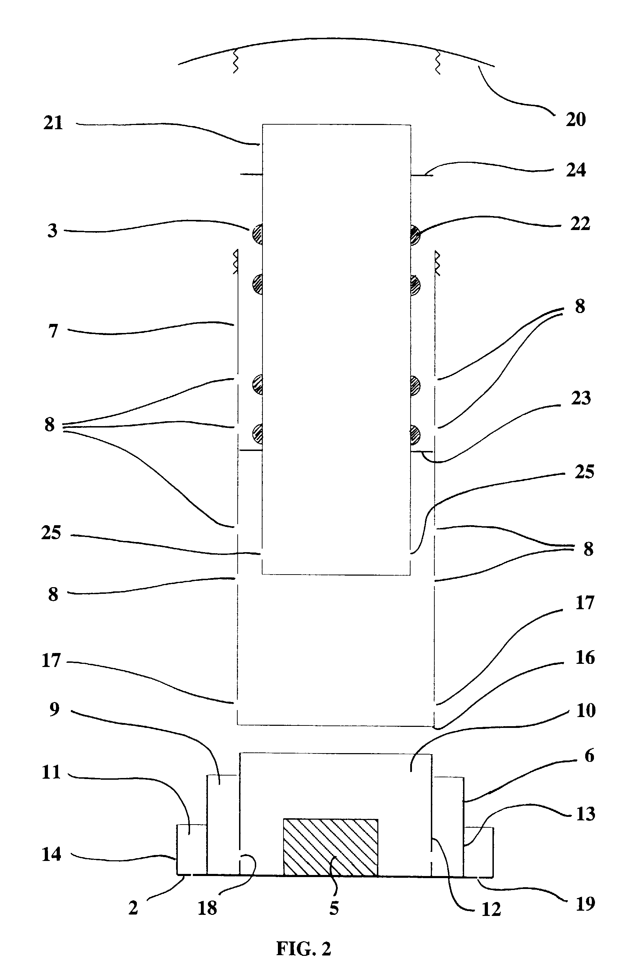

La partie verticale 7 comportera un couvercle 20 à bords saillants destiné à obturer l'extrémité supérieure de celle-ci, comme représenté sur les figures 1, 2 et 3, et a couvrir la surface au sol du premier compartiment 9 et avantageusement du troisième compartiment 11 afin d'éviter un remplissage intempestif de ceux-ci par les pluies, le cas échéant. Le couvercle 20 a pour fonction essentielle de protéger l'intérieur de la partie verticale 7 des intempéries et d'éviter un dégagement excessif d'odeurs. Le couvercle 20 pourra être associé à la partie verticale 7 par emmanchement forcé ou par vissage comme représenté sur les figures 1 et 2, de manière démontable afin de permettre un entretien aisé de l'appareil, par un accès facile à l'intérieur de la partie verticale 7 par démontage du couvercle 20.

Les moyens pour attirer les chiens sont avantageusement logés à l'intérieur de la partie verticale 7 et au dessus de la paroi intérieure 12. L'appareil sanitaire représenté sur les figures 1 à 3 comprend au moins un passage 8 apte à permettre un dégagement des odeurs attractives hors de l'appareil, dans l'atmosphère. Ce passage 8 sera avantageusement constitué d'une pluralité de trous débouchant réalisés dans la paroi de la partie verticale 7 de manière uniformément répartie sur la surface libre de celle-ci lorsqu'elle est en appui sur le fond 2 du réceptacle 6, et que le couvercle 20 est associé à la partie verticale 7. Les trous 8 auront pour fonction d'une part de permettre le dégagement hors de l'appareil des odeurs émanant des moyens 3 et destinées à attirer les chiens vers l'appareil, et d'autre part de permettre un passage partiel des urines, émises par les chiens, à l'intérieur de la partie verticale 7 soit directement, soit lors de l'écoulement de celles-ci vers la base de la partie verticale 7 et directement dans le deuxième compartiment 10.

Les moyens 3 pour attirer les animaux domestiques comprennent avantageusement un support 21, constitué d'une paroi de forme cylindrique par exemple, logé à l'intérieur de la partie verticale 7 pour être protégé, en appui sur le fond 2 du réceptacle 6, et sur lequel est fixé un tissu 22 adhésif ou tout autre élément-support imprégné de tout produit attractif connus pour les chiens. Le produit utilisé pourra être par exemple un produit fabriqué sous la désignation commerciale "Spray attractif pour l'environnement, Family Dog and Cat" par les laboratoires Vétérinaires ICC. Le tissu dégagera l'odeur attractive à travers les trous 8 de la partie verticale 7 comme expliqué plus haut. Le support 21 sera d'un diamètre inférieur au diamètre intérieur de la partie verticale 7, et proche de ce dernier afin que l'odeur se dégage plus facilement à travers les trous 8.

Le support 21 pourra avantageusement être centré à l'intérieur de la partie verticale 7 au moyen de deux couronnes 23, 24 circulaires entourant la surface extérieure du support 21, et dont le diamètre extérieur est légèrement inférieur au diamètre intérieur de la partie verticale 7 afin de permettre un centrage du support 21 dans celle-ci, et supérieur au diamètre déterminé par l'encombrement extérieur du tissu imprégné, comme représenté sur les figures. Le support 21 pourra adopter une hauteur inférieure à celle de la partie verticale et voisine de celle-ci. De manière alternative, le support 21 pourra être centré sur le fond 2 du réceptacle 6 et sur le couvercle 20, au moyen d'épaulements par exemple (non représentés), et maintenu fixé entre ces éléments après montage de ceux-ci.

La base du support 21 en appui sur le fond 2 du réceptacle 6 comportera tout moyen de passage traversant la paroi de forme cylindrique, par exemple des ouvertures 25 comme représenté sur la figure 2, afin d'assurer un remplissage correct du deuxième compartiment 10 à l'intérieur du support 21.

Les couronnes 23 et 24 pourront être rendues solidaires du support 21 par une liaison indémontable, selon tout moyen connu, par exemple par soudage dans le cas de matériaux métalliques. La couronne inférieure 23 sera fixée de manière à être voisine de l'extrémité haute de la paroi intérieure verticale 12, lorsque ces éléments sont assemblés, et la couronne supérieure 24 sera fixée à une hauteur légèrement supérieure à la hauteur des trous 8 les plus hauts placés sur la partie verticale 7, comme représenté sur les figures. Ainsi, le produit attractif est disposé dans un espace protégé s'ouvrant sensiblement uniquement vers l'extérieur de l'appareil, compris entre la surface extérieure du support 21, la surface intérieure de la partie verticale 7 et les deux couronnes 23, 24, permettant au produit de remplir sa fonction d'attirer les chiens, par dégagement d'émanations volatiles attractives, de manière durable et satisfaisante. La couronne inférieure 23 sera apte à laisser s'écouler les urines ayant pénétrées à l'intérieur de la partie verticale 7 par les trous 8, vers le deuxième compartiment 10. Ceci pourra être réalisé par exemple au moyen de faibles échancrures (non représentées) sur le pourtour de la couronne 23.

Les moyens pour traiter les déjections liquides comprennent un produit 5 permettant de neutraliser les composants desdites déjections liquides avantageusement en hydrolysant, émulsifiant, et dispersant lesdits composants, par exemple un produit commercialisé sous la marque "Sano Block" par la société Sanosil®. A défaut, un produit à base de dichlorobenzène peut être utilisé. Le produit 5 neutralisant pourra être avantageusement disposé dans le deuxième compartiment 10 et au centre de celui-ci, comme représenté sur la figure 1, afin d'être protégé et d'agir sur les urines lorsqu'elles arrivent dans ce compartiment.

Il est à noter que l'appareil représenté sur les figures 1 à 3 est plus particulièrement destiné à être installé dans un endroit dégagé de façon à être accessible sur son pourtour complet. Dans la mesure où l'appareil selon l'invention est destiné à être fixé contre un mur ou une façade, n'étant ainsi accessible que d'un côté, la section transversale de l'appareil, c'est à dire la section transversale du réceptacle 6, de la partie verticale 7, du support 21, et du couvercle 20 peut alors adopter de préférence une forme semi-circulaire avec une paroi plane, reliant les deux extrémités du demi-cercle, placée parallèlement au mur ou à la façade.

Il est à noter que de manière alternative a l'exemple représenté sur les figures 1 à 3, diverses formes de section transversale peuvent être adoptées pour l'appareil selon l'invention, et plus particulièrement pour la partie verticale destinée à recueillir les jets d'urines, par exemple des formes polygonales à faces concaves, ou toutes autres formes connues destinées à améliorer l'interception des jets d'urines, et l'écoulement vers la base de l'appareil.

Il est également à noter que la forme de la section transversale de la partie verticale peut être différente de celle du réceptacle, et notamment de celle des parois extérieures et intermédiaires de celui-ci.

Les matériaux utilisés pour la réalisation des divers éléments constitutifs de l'appareil selon l'invention seront choisis parmi les matériaux résistant aux agressions chimiques des déjections liquides des chiens ainsi qu'à celles de l'eau ou de l'atmosphère spécifique du lieu dans lequel est placé l'appareil, ne réclamant de préférence aucun entretien, un acier inoxydable ou analogue convenant pour la plupart des usages.

L'appareil selon l'invention adoptera des dimensions appropriées de façon à retenir un volume suffisant d'urine, en fonction des cycles d'entretien de celui-ci, et du nombre de chiens qui fréquentent l'appareil. L'entretien de celui-ci peut comprendre une aspiration régulière du ou des compartiments retenant les urines traitées, essentiellement du deuxième compartiment 10 à l'intérieur de la partie verticale 7, d'accès aisé par le simple retrait du couvercle, et un nettoyage des surfaces exposées pour maintenir une bonne propreté de l'appareil et des lieux. Un entretien moins fréquent peut consister à renouveler le produit attractif et le produit de neutralisation des urines. La hauteur de l'appareil devra être suffisante pour permettre à tous les chiens, notamment les plus grands, d'atteindre la partie verticale.

L'appareil selon l'invention peut avantageusement être utilisé en tout endroit fréquenté par les animaux domestiques, notamment de la famille des canidés, et plus particulièrement par les chiens. Les endroits privilégiés d'utilisation sont les lieux publics, notamment voies publiques, parcs ou jardins publics, et également certains lieux privés à forte fréquentation par les chiens, comme les jardins ou parcs en copropriétés. Tous autres lieux fréquentés par les chiens, accompagnés ou non, et dont on désire une propreté vis à vis de leurs urines, pourront avantageusement être équipés d'un appareil selon l'invention.

## Revendications

1. Appareil sanitaire pour animaux domestiques, notamment de la famille des canidés, comprenant des moyens de contrôle (1) des déjections liquides desdits animaux domestiques, des moyens d'appui (2) desdits moyens de contrôle sur ledit lieu fréquenté par les animaux domestiques, lesdits moyens de contrôle comprenant des moyens (3) pour attirer lesdits animaux domestiques, des moyens (4) pour recueillir leurs déjections liquides, des moyens (5) pour traiter lesdites déjections liquides, lesdits moyens pour attirer lesdits animaux domestiques comprenant un premier produit apte à dégager des émanations volatiles attractives pour lesdits animaux domestiques, ledit appareil étant ***caractérisé en ce que*** lesdits moyens (4) pour recueillir les déjections liquides comprennent au moins un moyen de réceptacle (6) pour retenir lesdites déjections liquides, et une partie verticale (7) associée au dit moyen de réceptacle et s'élevant au moins partiellement au dessus de ce dernier, afin de recueillir un ou des jets desdites déjections liquides.

2. Appareil sanitaire selon la revendication 1, ***caractérisé en ce que*** lesdits moyens (3) pour attirer lesdits animaux domestiques sont logés à l'intérieur de ladite partie verticale (7), et en ce que ledit appareil comprend au moins un premier passage (8) assurant une communication pour fluide entre lesdits moyens (3) pour attirer lesdits animaux domestiques et l'atmosphère.

3. Appareil sanitaire selon la revendication 1 ou 2, ***caractérisé en ce qu**'il* comprend au moins un premier (9) compartiment à la base de ladite partie verticale (7), entourant au moins partiellement ladite partie verticale, un deuxième (10) compartiment à l'intérieur de ladite partie verticale, lesdits premier et deuxième compartiments communiquant au moyen d'un deuxième (15) passage apte à être traversé par lesdites déjections liquides, ledit premier compartiment étant destiné à recueillir les déjections liquides s'écoulant le long de ladite partie verticale et à l'extérieur de celle-ci, ledit deuxième compartiment étant destiné à contenir au moins lesdits moyens (5) pour traiter lesdites déjections liquides.

4. Appareil sanitaire selon la revendication 3, ***caractérisé en ce qu***'il comprend additionnellement un troisième (11) compartiment entourant au moins partiellement ledit premier (9) compartiment.

5. Appareil sanitaire selon l'une quelconque des revendications 1 à 4, ***caractérisé en ce que*** ladite partie verticale (7) est associée de manière démontable au dit moyen de réceptacle (6).

6. Appareil sanitaire selon l'une quelconque des revendications 1 à 5, ***caractérisé en ce que*** lesdits moyens (5) pour traiter lesdites déjections liquides comprennent un produit permettant de neutraliser les composants desdites déjections liquides en hydrolysant, émulsifiant, et dispersant lesdits composants.
